# FASCICULE DE BREVET EUROPEEN

(11) **EP 0 905 410 B1**
(45) Date de publication et mention de la délivrance du brevet: **02.05.2003**
(21) Numéro de dépôt: 98118363.5
(22) Date de dépôt: 29.09.1998
(51) Int. Cl.: F16F 15/134, F16F 1/12

(54) **Dispositif élastique d'amortissement, en particulier pour double volant amortisseur, et double volant amortisseur équipé d'un tel dispositif**
Elastisches Dämpfungsglied, insbesondere für Zweimassenschwungräder und ein mit diesem ausgerüstetes Zweimassenschwungrad
Elastic damping means, especially for a double mass flywheel and a double mass flywheel equiped with such a means

(30) Priorité: 30.09.1997 FR 9712115
(43) Date de publication de la demande: 31.03.1999
(73) Titulaire: VALEO, 75017 Paris (FR)
(72) Inventeur: Rohrle, Dieter, 95160 Montmorency (FR); Tardiveau, Christophe, 75018 Paris (FR)
(74) Mandataire: Gamonal, Didier

(56) Documents cités:
- EP-A- 0 795 459
- WO-A-94/27062
- WO-A-97/21047
- DE-A- 4 426 964
- DE-A- 19 516 271
- FR-A- 2 742 507
- GB-A- 2 297 602
- PATENT ABSTRACTS OF JAPAN vol. 006, no. 076 (M-128), 13 mai 1982 & JP 57 015135 A (SHIN MEIWA IND CO LTD), 26 janvier 1982

## Description

L'invention se rapporte à un dispositif élastique d'amortissement entrant, en particulier, dans la constitution d'un double volant amortisseur; elle concerne plus particulièrement un perfectionnement apporté aux dispositifs élastiques d'amortissement permettant de disposer d'une sécurité de fonctionnement accrue.

On connaît du document WO 97/21047 un double volant amortisseur comprenant deux masses tournantes coaxiales entre lesquelles sont rattachés, de façon articulée, des dispositifs élastiques d'amortissement régulièrement répartis circonférentiellement. De tels dispositifs sont orientés globalement radialement dans le double volant amortisseur lorsque les deux masses tournantes se trouvent en position stable de repos l'une par rapport à l'autre, circonférentiellement. En fonctionnement, les décalages angulaires entre les deux masses entraînent une inclinaison des dispositifs élastiques d'amortissement par rapport à leurs directions radiales de repos respectives. Par conséquent, les dispositifs élastiques d'amortissement s'allongent entre leurs points d'articulation aux deux masses tournantes.

Un dispositif élastique d'amortissement comporte, d'une part, un premier sous-ensemble comprenant un boîtier allongé muni d'une première pièce d'articulation pour sa liaison à l'une des masses tournantes et, d'autre part, un second sous-ensemble comprenant au moins un ressort hélicoïdal monté sur une tige munie d'une seconde pièce d'articulation pour son articulation à l'autre des masses tournantes, ce second sous-ensemble étant au moins partiellement engagé dans le boîtier qui abrite notamment le ressort. Celui-ci prend appui entre une première butée située à une extrémité de la tige, engagée dans le boîtier, et une seconde butée fixée à l'extrémité du boîtier opposée à ladite première pièce d'articulation.

Par conséquent, l'élongation du dispositif élastique d'amortissement se traduit par une compression du ressort à l'intérieur du boîtier.

Dans des conditions de fonctionnement extrêmes, l'élongation des dispositifs élastiques d'amortissement peut amener les ressorts à spires jointives. Le couple peut alors se répartir très inégalement entre les différents dispositifs élastiques d'amortissement, pouvant entraîner la détérioration de l'un d'eux. L'invention permet d'éviter ce type d'incident.

Ainsi, selon l'invention, un dispositif élastique d'amortissement pour double volant amortisseur, destiné à être rattaché et articulé entre deux masses tournantes en étant orienté globalement radialement, ledit dispositif présentant à cet effet un axe d'articulation (y-y, z-z) à chacune de ses extrémités, et comportant, d'une part, un premier sous-ensemble comprenant un boîtier allongé muni d'une première pièce d'articulation et, d'autre part, un second sous-ensemble comprenant au moins un ressort hélicoïdal monté sur une tige munie d'une seconde pièce d'articulation et ledit ressort prenant appui entre une première butée située à une extrémité de ladite tige et une seconde butée fixée à une extrémité dudit boîtier après assemblage des deux sous-ensembles, est caractérisé par le fait que l'une au moins des butées est déformable plastiquement.

Grâce à l'invention, on s'affranchit des tolérances de fabrication des diverses pièces et tous les ressorts viendront à spires jointives en même temps dès la première condition de fonctionnement extrême, une (ou plusieurs) butée(s) se déformant plastiquement si nécessaire. Le réglage est donc automatique.

Avantageusement, la butée déformable plastiquement comprend un fond solidarisé à l'extrémité de l'un des éléments tige ou boîtier, un moyen déformable plastiquement, disposé entre ledit fond et le ressort hélicoïdal, étant adapté à prendre appui sur ledit fond.

De préférence, le moyen déformable plastiquement est constitué par une rondelle annulaire entourant la tige ; la rondelle annulaire a en coupe axiale une forme concave (bombée) dont la concavité est dirigée vers le fond ; en variante, la rondelle annulaire a une structure en nid d'abeilles ; selon une autre variante, la rondelle annulaire est une rondelle conique ; la rondelle annulaire conique est placée entre deux rondelles planes d'appui situées l'une côté fond, l'autre côté ressort hélicoïdal.

Selon une autre forme de réalisation, la butée déformable plastiquement est constituée par un fond, solidarisé à l'extrémité de l'un des éléments tige ou boîtier, dont la face tournée vers le ressort hélicoïdal est munie d'une empreinte dans laquelle l'extrémité du ressort hélicoïdal, avantageusement profilée en conséquence, est susceptible de s'incruster.

Avantageusement, une coupelle est solidarisée au fond, ladite coupelle comportant une jupe cylindrique entourant la tige à distance radiale de celle-ci et munie, à son extrémité opposée à celle par laquelle elle est solidarisée au fond, d'un rebord transversal annulaire, une bague de guidage étant placée dans le volume défini par la coupelle, la tige et le fond ; le ressort hélicoïdal entoure un second ressort hélicoïdal qui entoure lui-même la tige et qui prend appui sur le rebord transversal annulaire de la coupelle.

De préférence, la rondelle annulaire est réalisée d'une seule pièce avec la coupelle dont elle constitue une collerette prolongeant radialement vers l'extérieur la jupe à l'opposé du rebord transversal annulaire.

Lorsque la rondelle annulaire est une rondelle conique, placée entre deux rondelles planes d'appui, la rondelle plane d'appui côté fond est réalisée d'une seule pièce avec la coupelle dont elle constitue une collerette prolongeant radialement vers l'extérieur la jupe à l'opposé du rebord transversal annulaire.

Avantageusement, une seule butée est déformable plastiquement, l'autre butée étant constituée d'un piston solidaire de la tige et autour de la périphérie externe duquel est surmoulée une bague de guidage.

Selon une forme préférée de réalisation, la butée déformable plastiquement est la seconde butée dont le fond est solidaire du boîtier, le piston de la première butée étant de forme annulaire et solidaire de la tige.

De préférence, le boîtier est de forme tubulaire.

La présente invention a également pour objet un double volant amortisseur comprenant deux masses tournantes coaxiales entre lesquelles sont rattachés, de façon articulée, des dispositifs élastiques d'amortissement, dans lequel les dispositifs élastiques d'amortissement ont les caractéristiques du dispositif élastique d'amortissement ci-dessus.

L'invention sera mieux comprise et d'autres avantages de celle-ci apparaîtront plus clairement à la lumière de la description qui va suivre, donnée uniquement à titre d'exemple et faite en référence aux dessins annexés dans lesquels:
- la figure 1 est une demi-vue en élévation, en coupe partielle, d'un double volant amortisseur équipé d'organes élastiques d'amortissement selon l'invention;
- la figure 2 est une coupe selon II-II de la figure 1;
- la figure 3 est une vue de détail illustrant un organe élastique d'amortissement du double volant amortisseur, en coupe partielle ;
- la figure 4 est une vue partielle de la figure 3, à plus grande échelle ;
- les figures 5 à 7 sont des vues analogues à la figure 4 et illustrent chacune respectivement une variante.

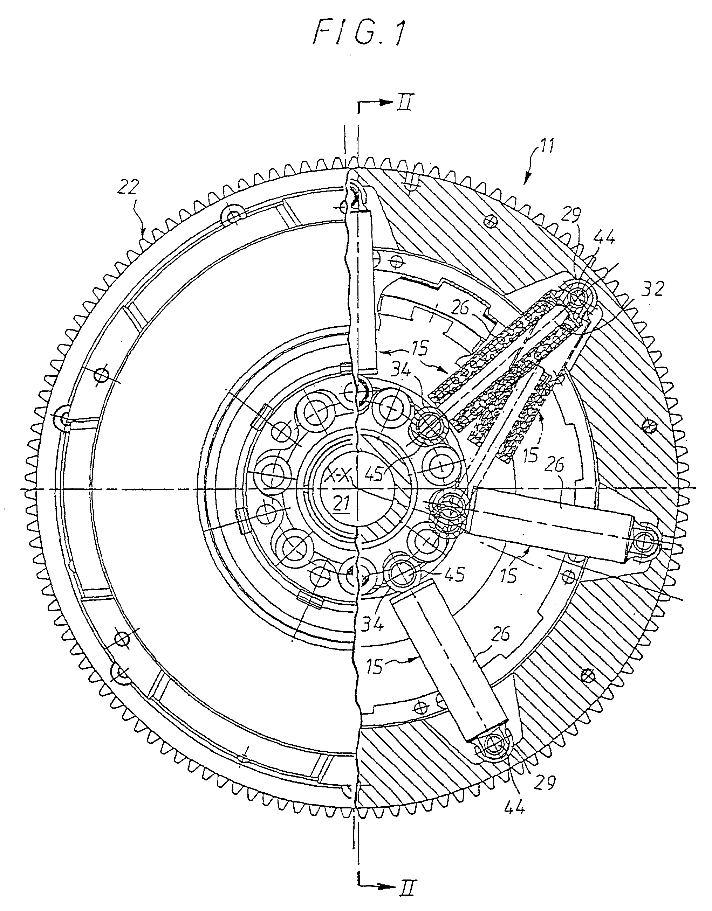

En se référant aux figures 1 à 4, on voit un double volant amortisseur de torsion 11 portant deux masses tournantes coaxiales 12, 13 montées mobiles en rotation l'une par rapport à l'autre autour d'un axe commun de symétrie axiale x-x à l'encontre de moyens d'amortissement élastiques comportant une série de dispositifs élastiques d'amortissement 15 d'orientation globalement radiale. La première masse 12 comporte essentiellement un plateau 14 et la seconde masse 13 comporte aussi un plateau 16 s'étendant parallèlement au plateau 12.

Les plateaux 14, 16 sont en matière moulable, typiquement en fonte, pour augmenter leur inertie.

La seconde masse tournante 13 est montée à rotation sur un moyeu tubulaire 18 de la première masse tournante 12. Ce moyeu 18 est une pièce de forme générale cylindrique d'axe x-x, ici réalisé d'un seul tenant avec le plateau 14. Des moyens de palier, ici un roulement à billes 19, sont interposés entre la périphérie externe du moyeu 18 et la périphérie interne de la seconde masse tournante 13.

La seconde masse tournante 13 constitue le plateau de réaction d'un embrayage à friction 17. Pour connaître en détail l'agencement d'un embrayage à friction en association avec un double volant amortisseur de ce type, on peut par exemple se reporter au document FR-A-2 524 350.

La première masse tournante 12 est prévue pour être reliée par des vis, grâce à des ouvertures 20 situées à sa périphérie interne, à un arbre menant, non représenté, tel que le vilebrequin d'un moteur à combustion interne d'un véhicule automobile. La seconde masse tournante 13 est liée en rotation par l'intermédiaire de l'embrayage 17 à l'arbre d'entrée 21 d'une boîte de vitesses du véhicule. La première masse tournante 12 porte à sa périphérie externe une couronne de démarreur 22 prévue pour être entraînée par le pignon du démarreur du moteur à combustion interne du véhicule automobile.

Comme indiqué ci-dessus, les moyens d'amortissement élastiques comportent une pluralité de dispositifs élastiques d'amortissement 15 répartis régulièrement circonférentiellement. Les différents dispositifs élastiques d'amortissement 15 sont disposés globalement radialement, entre les deux plateaux 14, 16.

Chaque dispositif élastique d'amortissement 15 renferme au moins un ressort hélicoïdal 24 logé à l'intérieur d'un boîtier 26. Plus précisément, le dispositif élastique d'amortissement 15 se divise en, d'une part, un premier sous-ensemble 27 comprenant ledit boîtier 26 muni d'une première pièce d'articulation 29, et, d'autre part, un second sous-ensemble 30 comprenant ledit ressort 24, monté sur une tige 32 munie d'une seconde pièce d'articulation 34. Le ressort 24 prend appui entre une première butée 36 située à une extrémité de la tige 32 placée à l'intérieur du boîtier 26 et une seconde butée 38 fixée à une extrémité 39 du boîtier 26 après assemblage des deux sous-ensembles 27 et 30. Ladite première pièce d'articulation 29 forme une sorte de rotule immobilisée à une extrémité du boîtier 26 par soudage. La rotule comporte un trou cylindrique 42 qui définit un axe d'articulation y-y. Elle est articulée à la première masse tournante 12, ici à la périphérie externe de ladite première masse tournante 12, par un tourillon 44 matérialisant cet axe. Le tourillon 44 est implanté à la périphérie externe du plateau 14 en étant porté par celui-ci.

Le ressort 24 prend appui entre ladite première butée 36 soudée à l'extrémité de la tige 32 et ladite seconde butée 38 comportant une bague de guidage 64 à l'intérieur de laquelle ladite tige 32 coulisse parallèlement à son axe longitudinal. La seconde butée 38 est fixée à l'extrémité 39 du boîtier 26 opposée à celle qui porte la première pièce d'articulation 29. A l'extérieur du boîtier 26, la seconde pièce d'articulation 34 est munie d'un alésage cylindrique formant palier de rotation z-z. Un tourillon 45 riveté à la seconde masse tournante 13 est engagé dans ce palier. Le tourillon 45 est implanté à la périphérie interne de la deuxième masse 13.

Chaque dispositif d'amortissement 15 est ainsi monté articulé entre les première et seconde masses tournantes 12, 13 entre les deux axes y-y et z-z.

De par sa structure, chaque dispositif élastique d'amortissement 15 a tendance à ramener les deux masses tournantes 12, 13 dans une position relative prédéterminée pour laquelle sa longueur est minimum. Tout mouvement relatif circonférentiel, entre les deux masses tournantes 12 et 13, se traduit par un allongement de chaque dispositif élastique d'amortissement 15 aboutissant à la compression des ressorts 24.

En fait, comme représenté, chaque boîtier 26 abrite deux ressorts coaxiaux 24, 25 de raideurs différentes. Un dispositif de frottement à action axiale 46 est interposé entre les deux masses tournantes 12 et 13 et constitue un dispositif d'hystérésis. Ce dernier ne fait pas partie de l'invention et ne sera donc pas décrit en détail.

Il ressort de la description qui précède que, si les dispositifs élastiques d'amortissement 15 ne présentent pas tous la même élongation maximum correspondant au serrage à spires jointives des ressorts 24 et/ou 25, l'un des dispositifs élastiques d'amortissement 15 risque de supporter un effort excessif dans des conditions de fonctionnement extrêmes, c'est-à-dire lorsque le décalage angulaire entre les deux masses tournantes 12, 13 atteint sa valeur maximum. L'invention propose des dispositifs élastiques d'amortissement 15 permettant d'éliminer ce risque, de façon que, lorsque les masses tournantes 12, 13 atteignent leur décalage angulaire maximum, tous les ressorts 24 des différents dispositifs élastiques d'amortissement 15 se bloquent à spires jointives en même temps, et les efforts se trouvent répartis entre les différents dispositifs élastiques d'amortissement 15.

Pour ce faire, selon l'invention, l'une au moins des butées 36, 38 est déformable plastiquement.

Sur les figures 1 à 4, c'est la seconde butée 38 qui est déformable plastiquement.

La seconde butée 38 comprend un fond 51 solidarisé par soudure à l'extrémité 39 du boîtier 26, ici de forme tubulaire.

Une coupelle 61, ici de forme tubulaire, entoure, par sa jupe cylindrique 62, la tige 32 en étant à distance radiale de celle-ci ; une extrémité de la jupe 62 est solidarisée au fond 51 par soudage en 65 ; l'autre extrémité de la jupe 62 est munie d'un rebord transversal annulaire 63 ; la bague de guidage 64 est placée dans le volume défini par la jupe 62 de la coupelle 61, la tige 32 et le fond 51, dans lequel elle est bien maintenue.

La jupe 62 de la coupelle 61 est prolongée, à son extrémité voisine du fond 51, radialement vers l'extérieur, par une collerette en forme de rondelle annulaire 52 ayant en coupe axiale une forme concave dont la concavité est dirigée vers le fond 51 ; c'est cette rondelle annulaire 52 qui constitue le moyen déformable plastiquement proprement dit de la butée déformable plastiquement 38. La collerette 52 est donc de forme bombée et est dirigée radialement en sens opposé par rapport au rebord 63. Le soudage en 65 est réalisé au niveau du raccordement de la collerette 52 à la jupe 62 de la coupelle 61 pour autoriser une déformation de la collerette 52.

Le ressort 24 entoure le ressort 25 qui lui-même entoure la tige 32 : le rebord transversal annulaire 63 de la coupelle 61 est mis à profit pour servir d'appui au ressort 25 et ménager la bague de guidage 64.

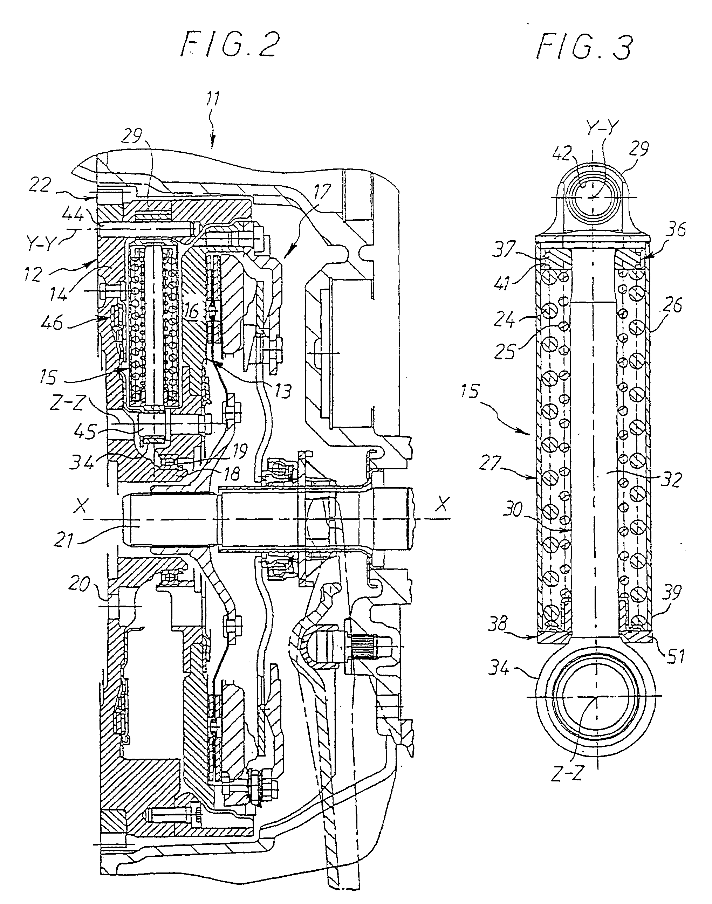

La première butée 36, figure 3, comprend un piston 37 sur lequel prennent appui les ressorts 24 et 25 ; une bague de guidage 41 est surmoulée à la périphérie externe du piston 37 qui est solidaire, ici par soudage, de la tige 32.

Ainsi, compte tenu de la forme de la rondelle annulaire 52, dès la première condition de fonctionnement extrême, si nécessaire la rondelle annulaire 52 correspondant aux premiers ressorts 24 mis à spires jointives s'écrase plus ou moins : on appréciera le caractère automatique du réglage des distances entre les faces des butées 36, 38 avec lesquelles coopèrent les extrémités des ressorts 24 des dispositifs élastiques d'amortissement 15 ; grâce à ce réglage, en conditions extrêmes, tous les ressorts 24 seront à spires jointives en même temps.

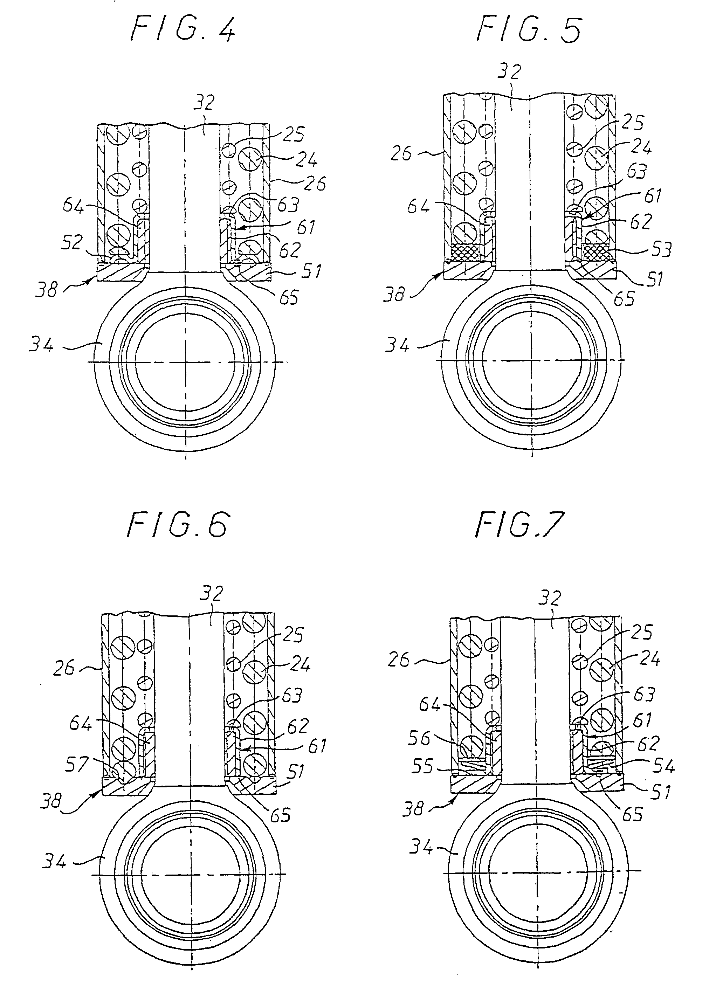

Selon la variante de la figure 5, la coupelle 61 ne comporte pas de collerette 52 ; ici, le moyen déformable plastiquement est constitué par une rondelle annulaire 53 ayant une structure en nid d'abeilles. L'extrémité de la jupe 62 est soudée directement en 65 sur le fond 51. II en est de même à la figure 6.

Selon la variante de la figure 6, la coupelle 61 ne comporte pas, non plus, de collerette 52 ; ici, c'est le fond 51 lui-même qui constitue la butée déformable élastiquement ; à cet effet, la face du fond 51 tournée vers le ressort 24 est munie d'une empreinte 57, ici de forme pointue, dans laquelle l'extrémité du ressort hélicoïdal 24 est susceptible de s'incruster. L'extrémité du ressort 24 est donc ici profilée pour s'incruster dans l'empreinte 57 moins dure.

Selon la variante de la figure 7, le moyen déformable plastiquement est une rondelle annulaire 54 conique déformable plastiquement et placée entre deux rondelles planes d'appui 55 et 56, dont l'une 55 est située du côté du fond 51 et l'autre 56 du côté du ressort hélicoïdal 24.

Avantageusement, comme cela est représenté sur la figure, la rondelle plane d'appui 55 située du côté du fond 51 est réalisée d'une seule pièce avec la coupelle 61 dont elle constitue une collerette prolongeant radialement vers l'extérieur la jupe 62 à l'opposé du rebord transversal annulaire 63 ; ici, c'est par la rondelle plane d'appui 55 qu'est solidarisée au fond 51 par soudage en 65 la coupelle 61.

Comme on l'a vue, dans les variantes décrites jusqu'ici, c'est la seconde butée 38 qui est déformable plastiquement ; bien entendu, ce pourrait être la première butée 36 ; en variante, les deux butées 36 et 38 sont déformables plastiquement.

Comme on l'a vu également, c'est le ressort 24 qui coopère avec le moyen élastiquement déformable et les deux ressorts 24 et 25 sont réalisés en sorte que lorsque le ressort 24 est à spires jointives, le ressort 25 ne l'est pas et ne le sera donc jamais en fonctionnement.

Bien entendu, on peut inverser les structures, la première pièce d'articulation 29 étant montée à la périphérie externe de la seconde masse 13, la seconde pièce d'articulation 34 étant alors montée à la périphérie interne de la première masse 12.

Grâce à l'invention, on peut former un sous-ensemble fond 51-coupelle 61-bague de guidage 64, et ce grâce à la soudure en 65. En outre, on obtient un appui franc du ressort 24 sur les deux butées 36, 38 du fait de la déformation plastique de l'une au moins d'entre elles.

## Revendications

1. Dispositif élastique d'amortissement (15) pour double volant amortisseur, destiné à être rattaché et articulé entre deux masses tournantes (12, 13) en étant orienté globalement radialement, ledit dispositif présentant à cet effet un axe d'articulation (y-y, z-z) à chacune de ses extrémités, et comportant, d'une part, un premier sous-ensemble (27) comprenant un boîtier (26) allongé muni d'une première pièce d'articulation (29) et, d'autre part, un second sous-ensemble (30) comprenant au moins un ressort hélicoïdal (24, 25) monté sur une tige (32) munie d'une seconde pièce d'articulation (34) et ledit ressort prenant appui entre une première butée (36) située à une extrémité de ladite tige (32) et une seconde butée (38) fixée à une extrémité dudit boîtier (26) après assemblage des deux sous-ensembles (27, 30), **caractérisé par le fait que** l'une au moins des butées (36, 38) est déformable plastiquement.

2. Dispositif selon la revendication 1, **caractérisé par le fait que** la butée déformable plastiquement comprend un fond (51) solidarisé à l'extrémité de l'un des éléments tige (32) ou boîtier (26), un moyen déformable plastiquement (52,53,54,51), disposé entre ledit fond (51) et le ressort hélicoïdal (24, 25), étant adapté à prendre appui sur ledit fond (51).

3. Dispositif selon la revendication 2, **caractérisé par le fait que** le moyen déformable plastiquement est constitué par une rondelle annulaire (52,53,54) entourant la tige (32).

4. Dispositif selon la revendication 3, **caractérisé par le fait que** la rondelle annulaire (52) a en coupe axiale une forme concave dont la concavité est dirigée vers le fond (51).

5. Dispositif selon la revendication 3, **caractérisé par le fait que** la rondelle annulaire (53) a une structure en nid d'abeilles.

6. Dispositif selon la revendication 3, **caractérisé par le fait que** la rondelle annulaire (54) est une rondelle conique.

7. Dispositif selon la revendication 6, **caractérisé par le fait que** la rondelle annulaire (54) conique est placée entre deux rondelles planes d'appui (55,56) situées l'une (55) côté fond (51), l'autre (56) côté ressort hélicoïdal (24).

8. Dispositif selon la revendication 1, **caractérisé par le fait que** la butée déformable plastiquement est constituée par un fond (51), solidarisé à l'extrémité de l'un des éléments tige (32) ou boîtier (26), dont la face tournée vers le ressort hélicoïdal (24) est munie d'une empreinte (57) dans laquelle l'extrémité du ressort hélicoïdal (24) est susceptible de s'incruster.

9. Dispositif selon l'une des revendications 2 à 8, **caractérisé par le fait qu'**une coupelle (61) est solidarisée (65) au fond (51), ladite coupelle (61) comportant une jupe (62) cylindrique entourant la tige (32) à distance radiale de celle-ci et munie, à son extrémité opposée à celle par laquelle elle est solidarisée au fond (51), d'un rebord transversal annulaire (63), une bague de guidage (64) étant placée dans le volume défini par la coupelle (61), la tige (32) et le fond (51).

10. Dispositif selon la revendication 9, **caractérisé par le fait que** le ressort hélicoïdal (24) entoure un second ressort hélicoïdal (25) qui entoure lui-même la tige (32) et qui prend appui sur le rebord transversal annulaire (63) de la coupelle (61).

11. Dispositif selon les revendications 4 et 9 prises conjointement, **caractérisé par le fait que** la rondelle annulaire (52) est réalisée d'une seule pièce avec la coupelle (61) dont elle constitue une collerette prolongeant radialement vers l'extérieur la jupe (62) à l'opposé du rebord transversal annulaire (63).

12. Dispositif selon les revendications 7 et 9 prises conjointement, **caractérisé par le fait que** la rondelle plane d'appui (55) côté fond (51) est réalisée d'une seule pièce avec la coupelle (61) dont elle constitue une collerette prolongeant radialement vers l'extérieur la jupe (62) à l'opposé du rebord transversal annulaire (63).

13. Dispositif selon l'une des revendications 1 à 12, **caractérisé par le fait qu'**une seule butée (38) est déformable plastiquement, l'autre butée (36) étant constituée d'un piston (37) solidaire de la tige (32) et autour de la périphérie externe duquel est surmoulée une bague de guidage (41).

14. Dispositif selon la revendication 13, **caractérisé par le fait que** la butée déformable plastiquement est la seconde butée (38) dont le fond (31) est solidaire du boîtier (26), le piston (37) de la première butée (36) étant de forme annulaire et solidaire de la tige (32).

15. Dispositif selon l'une des revendications 1 à 14, **caractérisé par le fait que** le boîtier (26) est de forme tubulaire.

16. Double volant amortisseur comprenant deux masses tournantes coaxiales entre lesquelles sont rattachés, de façon articulée, des dispositifs élastiques d'amortissement, **caractérisé par le fait que** les dispositifs élastiques d'amortissement ont les caractéristiques du dispositif élastique d'amortissement (15) selon l'une des revendications 1 à 15.

## Patentansprüche

1. Elastische Dämpfungsvorrichtung (15) für ein Zweimassen-Dämpfungsschwungrad, die für die Anfügung und Anlenkung zwischen zwei umlaufenden Massen (12, 13) bestimmt und insgesamt radial ausgerichtet ist, wobei die besagte Vorrichtung dazu eine Gelenkachse (y-y, z-z) an jedem ihrer Enden aufweist, umfassend einerseits eine erste Untergruppe (27), die ein langgestrecktes Gehäuse (26) mit einem ersten Anlenkteil (29) enthält, und andererseits eine zweite Untergruppe (30), die mindestens eine Schraubenfeder (24, 25) enthält, die auf einem Schaft (32) mit einem zweiten Anlenkteil (34) angebracht ist, wobei die besagte Feder nach der Zusammenfügung der beiden Untergruppen (27, 30) zwischen einem ersten Anschlag (36), der sich an einem Ende des besagten Schafts (32) befindet, und einem zweiten Anschlag (38) zur Auflage kommt, der an einem Ende des besagten Gehäuses (26) befestigt ist, **dadurch gekennzeichnet, dass** mindestens einer der Anschläge (36, 38) plastisch verformbar ist.

2. Vorrichtung nach Anspruch 1, **dadurch gekennzeichnet, dass** der plastisch verformbare Anschlag einen Boden (51) umfasst, der fest mit dem Ende eines der Elemente Schaft (32) oder Gehäuse (26) verbunden ist, wobei ein plastisch verformbares Mittel (52, 53, 54, 51), das zwischen dem besagten Boden (51) und der Schraubenfeder (24, 25) angeordnet ist, auf dem besagten Boden (51) zur Auflage kommen kann.

3. Vorrichtung nach Anspruch 2, **dadurch gekennzeichnet, dass** das plastisch verformbare Mittel aus einer ringförmigen Scheibe (52, 53, 54) besteht, die den Schaft (32) umgibt.

4. Vorrichtung nach Anspruch 3, **dadurch gekennzeichnet, dass** die ringförmige Scheibe (52) im Axialschnitt eine konkave Form hat, deren Austiefung zum Boden (51) gerichtet ist.

5. Vorrichtung nach Anspruch 3, **dadurch gekennzeichnet, dass** die ringförmige Scheibe (53) eine Wabenstruktur hat.

6. Vorrichtung nach Anspruch 3, **dadurch gekennzeichnet, dass** die ringförmige Scheibe (54) eine konische Scheibe ist.

7. Vorrichtung nach Anspruch 6, **dadurch gekennzeichnet, dass** die ringförmige konische Scheibe (54) zwischen zwei ebenen Auflagescheiben (55, 56) angeordnet ist, von denen sich eine (55) auf der Seite des Bodens (51) und die andere (56) auf der Seite der Schraubenfeder (24) befindet.

8. Vorrichtung nach Anspruch 1, **dadurch gekennzeichnet, dass** der plastisch verformbare Anschlag aus einem fest mit dem Ende eines der Elemente Schaft (32) oder Gehäuse (26) verbundenen Boden (51) besteht, dessen zur Schraubenfeder (24) gerichtete Fläche mit einer Einsenkung (57) versehen ist, in die sich das Ende der Schraubenfeder (24) eindrücken kann.

9. Vorrichtung nach eine der Ansprüche 2 bis 8, **dadurch gekennzeichnet, dass** eine Schale (61) fest (65) mit dem Boden (51) verbunden ist, wobei die besagte Schale (61) eine zylindrische Einfassung (62) umfasst, die den Schaft (32) in einem radialen Abstand von diesem umgibt u nd a n ihrem dem E nde, d urch das sie fest mit dem Boden (51) verbunden ist, gegenüberliegenden Ende mit einer ringförmigen Querrandleiste (63) versehen ist, wobei ein Führungsring (64) in dem durch die Schale (61), den Schaft (32) und den Boden (51) definierten Raum angeordnet ist.

10. Vorrichtung nach Anspruch 9, **dadurch gekennzeichnet, dass** die Schraubenfeder (24) eine zweite Schraubenfeder (25) umgibt, die ihrerseits den Schaft (32) umgibt und die auf der ringförmigen Querrandleiste (63) der Schale (61) zur Auflage kommt.

11. Vorrichtung nach den verbundenen Ansprüchen 4 und 9, **dadurch gekennzeichnet, dass** die ringförmige Scheibe (52) einstückig mit der Schale (61) ausgeführt ist, von der sie einen Kragen bildet, der die Einfassung (62) entgegengesetzt zur ringförmigen Querrandleiste (63) radial nach außen verlängert.

12. Vorrichtung nach den verbundenen Ansprüchen 7 und 9, **dadurch gekennzeichnet, dass** die Auflagescheibe (55) auf der Seite des Bodens (51) einstückig mit der Schale (61) ausgeführt ist, von der sie einen Kragen bildet, der die Einfassung (62) entgegengesetzt zur ringförmigen Querrandleiste (63) radial nach außen verlängert.

13. Vorrichtung nach einem der Ansprüche 1 bis 12, **dadurch gekennzeichnet, dass** nur ein Anschlag (38) plastisch verformbar ist, während der andere Anschlag (36) aus einem fest mit dem Schaft (32) verbundenen Kolben (37) besteht, um dessen äußeren Umfang herum ein Führungsring (41) aufgeformt ist.

14. Vorrichtung nach Anspruch 13, **dadurch gekennzeichnet, dass** der plastisch verformbare Anschlag der zweite Anschlag (38) ist, dessen Boden (31) fest mit dem Gehäuse (26) verbunden ist, wobei der Kolben (37) des ersten Anschlags (36) ringförmig ausgebildet und fest mit dem Schaft (32) verbunden ist.

15. Vorrichtung nach einem der Ansprüche 1 bis 14, **dadurch gekennzeichnet, dass** das Gehäuse (26) rohrförmig ausgebildet ist.

16. Zweimassen-Dämpfungsschwungrad, umfassend zwei umlaufende koaxiale Massen, zwischen denen gelenkig elastische Dämpfungsvorrichtungen angefügt sind, **dadurch gekennzeichnet, dass** die elastischen Dämpfungsvorrichtungen die Merkmale der elastischen Dämpfungsvorrichtung (15) nach einem der Ansprüche 1 bis 15 aufweisen.

## Claims

1. Elastic damping device (15) for a double damping flywheel, intended to be attached and articulated between two rotating masses (12, 13) whilst being oriented roughly radially, the said device having for this purpose an articulation axis (y-y, z-z) at each of its ends, and comprising on the one hand a first sub-assembly (27) comprising an elongate housing (26) provided with a first articulation piece (29) and on the other hand a second sub-assembly (30) comprising at least one helical spring (24, 25) mounted on a rod (32) provided with a second articulation piece (34) and the said spring bearing between a first stop (36) situated at one end of the said rod (32) and a second stop (38) fixed at one end of the said housing (26) after assembly of the two sub-assemblies (27, 30), **characterised by** the fact that at least one of the stops (36, 38) is plastically deformable.

2. Device according to Claim 1, **characterised by** the fact that the plastically deformable stop comprises a bottom (51) fixed to the end of one of the elements consisting of rod (32) or housing (26), a plastically deformable means (52, 53, 54, 51), disposed between the said bottom (51) and the helical spring (24, 25), being adapted to bear on the said bottom (51).

3. Device according to Claim 2, **characterised by** the fact that the plastically deformable means consists of an annular washer (52, 53, 54) surrounding the rod (32).

4. Device according to Claim 3, **characterised by** the fact that the annular washer (52) has in axial section a concave shape whose concavity is directed towards the bottom (51).

5. Device according to Claim 3, **characterised by** the fact that the annular washer (53) has a honeycomb structure.

6. Device according to the Claim 3, **characterised by** the fact the annular washer (54) is a conical washer.

7. Device according to Claim 6, **characterised by** the fact that the conical annular washer (54) is placed between two flat support washers (55, 56) situated one (55) on the same side as the bottom (51) and the other (56) on the same side as the helical spring (24).

8. Device according to Claim 1, **characterised by** the fact that the plastically deformable stop consists of a bottom (54) fixed to the end of one of the elements consisting of rod (32) or housing (26), whose face turned towards the helical spring (24) is provided with a recess (57) in which the end of the helical spring (24) is able to be embedded.

9. Device according to one of Claims 2 to 8, **characterised by** the fact that a cup (61) is fixed (65) to the bottom (51), the said cup (61) comprising a cylindrical skirt (62) surrounding the rod (32) at a radial distance therefrom and provided, at its end opposite to the one by means of which it is fixed to the bottom (51), with an annular transverse rim (63), a guidance ring (64) being placed in the volume defined by the cup.

10. Device according to Claim 9, **characterised by** the fact that the helical spring (24) surrounds a second helical spring (25) which itself surrounds the rod (32) and which bears on the annular transverse rim (63) of the cup (61).

11. Device according to Claims 4 and 9 taken conjointly, **characterised by** the fact that the annular washer (52) is produced in a single piece with the cup (61), for which it constitutes a collar extending the skirt (62) radially outwards.

12. Device according to Claims 7 and 9 taken conjointly, **characterised by** the fact that the flat support washer (55) on the same side as the bottom (51) is produced in a single piece with the cup (61), for which it constitutes a collar extending the skirt (62) radially outwards opposite to the annular transverse rim (63).

13. Device according to one of Claims 1 to 12, **characterised by** the fact that only one stop (38) is plastically deformable, the other stop (36) consisting of a piston (37) fixed to the rod (32) and around the external periphery of which a guidance ring (41) is moulded on.

14. Device according to Claim 13, **characterised by** the fact that the plastically deformable stop is the second stop (38) whose bottom (31) is fixed to the housing (26), the piston (37) of the first stop (36) being annular in shape and fixed to the rod (32).

15. Device according to one of Claims 1 to 14, **characterised by** the fact that the housing (26) is tubular in shape.

16. Double damping flywheel comprising two coaxial rotating masses between there are attached, in an articulated manner, elastic damping devices, **characterised by** the fact that the elastic damping devices have the characteristics of the elastic damping device (15) according to one of Claims 1 to 15.
